# FASCICULE DE BREVET EUROPEEN

(11) **EP 3 096 979 B1**
(45) Date de publication et mention de la délivrance du brevet: **27.11.2019**
(21) Numéro de dépôt: 14827817.9
(22) Date de dépôt: 10.12.2014
(51) Int. Cl.: B60N 2/815, B60N 2/818, B60N 2/894, B60N 2/897

(54) **DISPOSITIF D'APPUI D'UNE TÊTE ET/OU D'UN COU À PIÈCE EN MATÉRIAU DÉFORMABLE ET ABSORBANT L'ÉNERGIE, POUR UN DOSSIER DE SIÈGE**
STÜTZVORRICHTUNG FUER EINEN KOPF UND/ODER EINEN NACKEN AUS EINEM VERFORMBAREN UND ENERGIEBASORBIERENDEN MATERIAL, FÜR DIE RÜCKENLEHNE EINES SITZES
SUPPORT DEVICE FOR A HEAD AND/OR A NECK FROM A DEFORMABLE AND ENERGY ABSORBING MATERIAL, FOR A BACKREST OF A SEAT

(30) Priorité: 21.01.2014 FR 1450493
(43) Date de publication de la demande: 30.11.2016
(73) Titulaire: PSA Automobiles SA, 78300 Poissy (FR)
(72) Inventeur: LEBRETON, Pierre, F-94300 Vincennes (FR); BERTIN, Frederic, F-78340 Les Clayes Sous Bois (FR); COTTA, Gerald, F-78330 Fontenay Le Fleury (FR)
(74) Mandataire: Jeannin, Laurent Jean-Pierre
(86) Numéro de dépôt international: PCT/FR2014/053264
(87) Numéro de publication internationale: WO 2015/110721

(56) Documents cités:
- EP-A2- 1 752 334
- WO-A1-2004/082987

## Description

L'invention concerne les sièges, et plus précisément les dispositifs d'appui que comprennent certains dossiers de sièges et qui sont destinés à permettre l'appui de la tête et/ou du cou d'un usager assis.

On entend ici par « siège » un équipement comprenant une assise, destinée à être montée directement ou indirectement (via des piètements) sur un support (comme par exemple un plancher de véhicule, éventuellement de type automobile), et au moins un dossier, éventuellement monté à rotation (éventuellement sur l'assise). Par conséquent, l'invention concerne aussi bien les sièges de type monoplace que les sièges de type banquette. Elle concerne également les sièges disposant d'un dossier basculant.

Il existe au moins trois familles d'appui-tête.

Une première famille regroupe les appuis-tête électriques. Ces appuis-tête comprennent un coussin d'appui auquel sont solidarisées deux tiges parallèles coulissant dans des guides solidarisés fixement à une traverse supérieure d'un dossier. Le réglage en hauteur du coussin d'appui se fait de façon continue grâce à un moteur électrique entraînant un mécanisme lié aux tiges.

Une deuxième famille regroupe les appuis-tête mécaniques dits « standards ». Ces appuis-tête comprennent un coussin d'appui auquel sont solidarisées deux tiges parallèles coulissant dans des guides solidarisés fixement à une traverse supérieure d'un dossier, et qui pour l'une au moins d'entre elles comprend des crans destinés à coopérer avec un organe de verrouillage couplé à l'un des guides. Le réglage en hauteur du coussin d'appui se fait alors manuellement de façon discontinue du fait de la présence des crans.

Une troisième famille regroupe les appuis-tête mécaniques dits « à réglage intégré ». Ces appuis-tête comprennent un coussin d'appui munie d'un logement interne ouvert dans lequel est logée une pièce logeant fixement deux guides dans lesquels coulissent deux tiges sensiblement parallèles et solidarisées fixement à une traverse supérieure d'un dossier. L'une au moins des tiges comprend des crans qui sont destinés à coopérer avec un mécanisme de verrouillage qui est intégré dans la pièce et dans le coussin d'appui. Le réglage en hauteur du coussin d'appui se fait alors manuellement de façon discontinue du fait de la présence des crans.

On connait par le document WO2004/082987un appui tête comportant organe de verrouillage propre à être actionné depuis une face latérale dudit appui tête.

L'invention concerne cette troisième famille et est destinée à remédier à l'un au moins des inconvénients que présentent ses appuis-tête, à savoir :
- l'utilisation d'un mécanisme de verrouillage qui est généralement complexe, et donc onéreux,
- la génération de bruits désagréables du fait du positionnement de ressorts et pièces métalliques du mécanisme de verrouillage dans le coussin d'appui, dans une zone située à proximité des oreilles du passager,
- un fréquent défaut de parallélisme des tiges (du fait de leur solidarisation par soudage à l'armature du dossier), ce qui peut rendre difficile le coulissement,
- une manipulation peu aisée du fait de la masse additionnelle résultant de la présence du mécanisme de verrouillage.

L'invention propose donc, notamment, un dispositif, destiné à permettre l'appui de la tête et/ou du cou d'une personne installée sur un siège, et comprenant au moins une pièce, munie de deux logements internes logeant fixement deux guides dans lesquels sont destinées à coulisser deux tiges sensiblement parallèles et solidarisées fixement à une partie supérieure d'un dossier du siège et qui pour l'une au moins d'entre-elles comprend des crans destinés à coopérer avec un organe de verrouillage couplé à l'un des guides, ladite pièce comprenant une partie inférieure munie d'un logement additionnel qui communique avec les logements internes et avec l'extérieur sur des faces inférieure et latérale et qui loge l'organe de verrouillage dans une position qui est propre à permettre son actionnement du côté de cette face latérale.

Ce dispositif d'appui se caractérise par le fait que sa pièce :
- est réalisée dans un matériau qui est légèrement déformable, afin de supporter des dispersions de positionnement relatif des tiges, et propre à absorber de l'énergie en cas de choc de la tête et/ou du cou, et
- ledit matériau étant un polypropylène expansé.

On obtient ainsi un dispositif d'appui très simple, peu onéreux, de faible masse, capable d'encaisser une partie de l'énergie d'un choc et d'absorber les défauts de parallélisme des tiges.

Le dispositif d'appui selon l'invention peut comporter d'autres caractéristiques qui peuvent être prises séparément ou en combinaison, et notamment :
- il peut également comprendre un coussin d'appui, d'une part, muni d'un logement interne, logeant étroitement la pièce, communiquant avec l'extérieur sur des faces inférieure et latérale et logeant une partie d'extrémité de l'organe de verrouillage destinée à être actionnée, et, d'autre part, comprenant une face avant propre à permettre l'appui de la tête et/ou du cou ;
- l'organe de verrouillage peut comprendre une plaque munie d'un trou adapté au coulissement de la tige munie de crans, et montée en translation sous une force de rappel élastique dans un logement du guide associé à la tige munie de crans, de manière à permettre un décalage de son trou par rapport à un autre trou de ce guide.

L'invention propose également un dossier destiné à faire partie d'un siège et comprenant une partie supérieure, à laquelle sont solidarisées fixement au moins deux tiges sensiblement parallèles et qui pour l'une au moins d'entre-elles comprend des crans, et au moins un dispositif d'appui du type de celui présenté ci-avant et monté à coulissement sur les tiges.

L'invention propose également un siège comprenant au moins un dossier du type de celui présenté ci-avant.

L'invention propose également un véhicule, éventuellement de type automobile, et comprenant au moins un siège du type de celui présenté ci-avant.

D'autres caractéristiques et avantages de l'invention apparaîtront à l'examen de la description détaillée ci-après, et des dessins annexés (obtenus en CAO/DAO, d'où le caractère apparemment discontinu de certaines lignes et les niveaux de gris), sur lesquels :
- la figure 1 illustre schématiquement, dans une vue en perspective, les principaux composants d'un exemple de réalisation d'un dispositif d'appui selon l'invention avant leur assemblage et leur couplage à un dossier d'un siège de véhicule automobile,
- la figure 2 illustre schématiquement, dans une vue en perspective, le premier guide et l'organe de verrouillage du dispositif d'appui de la figure 1, avant qu'ils ne soient assemblés l'un à l'autre, et
- la figure 3 illustre schématiquement, dans une vue en coupe, le dispositif d'appui de la figure 1, une fois assemblé et couplé aux tiges parallèles d'un dossier de siège.

L'invention a notamment pour but de proposer un dispositif d'appui DA destiné à équiper un dossier DS d'un siège SI devant équiper un système.

On considère dans ce qui suit, à titre d'exemple non limitatif, que le siège SI est destiné à équiper un véhicule de type automobile, comme par exemple une voiture. Mais l'invention n'est pas limitée à cette application. Elle concerne en effet tout système comportant au moins un support (comme par exemple un plancher) sur lequel peut être installé au moins un siège SI selon l'invention. Par conséquent, l'invention concerne notamment tous les véhicules, quel qu'en soit le type (terrestre (y compris les tramways et les trains), maritime (ou fluvial), et aérien), les bâtiments, les jardins, les places publiques et les rues.

Par ailleurs, on considère dans ce qui suit, à titre d'exemple non limitatif, que le siège SI est de type monoplace. Mais l'invention n'est pas limitée à ce type de siège. Elle concerne en effet tout type de siège pouvant accueillir, en position assise, au moins une personne. Par conséquent, il pourra également s'agir d'une banquette, comportant éventuellement au moins deux dossiers DS, équipés chacun d'au moins un dispositif d'appui DA.

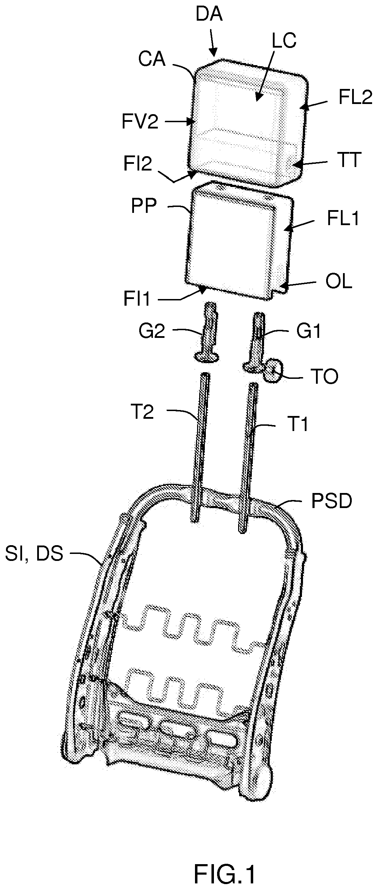

On a schématiquement illustré sur la figure 1 un exemple de réalisation d'une armature d'un dossier DS de siège SI de véhicule et un dispositif d'appui DA selon l'invention, avant leur couplage.

L'armature du dossier DS est destinée à être couplée à une assise (non représentée), par exemple montée indirectement (via des piètements) sur un plancher d'un véhicule. On notera que dans une variante l'assise pourrait être montée directement sur une partie surélevée du plancher du véhicule. Par ailleurs, cette armature du dossier DS peut être montée à rotation (éventuellement sur l'assise). Mais cela n'est pas obligatoire. De plus, cette armature du dossier DS est destinée à être équipée d'une mousse ainsi qu'éventuellement d'une housse, par exemple.

Comme illustré sur la figure 1, l'armature du dossier DS comprend une partie supérieure PSD à laquelle sont solidarisées fixement deux tiges Tj (j = 1 ou 2) sensiblement parallèles. Cette solidarisation peut, par exemple, se faire par soudage sur une traverse supérieure. En variante elle pourrait se faire par vissage.

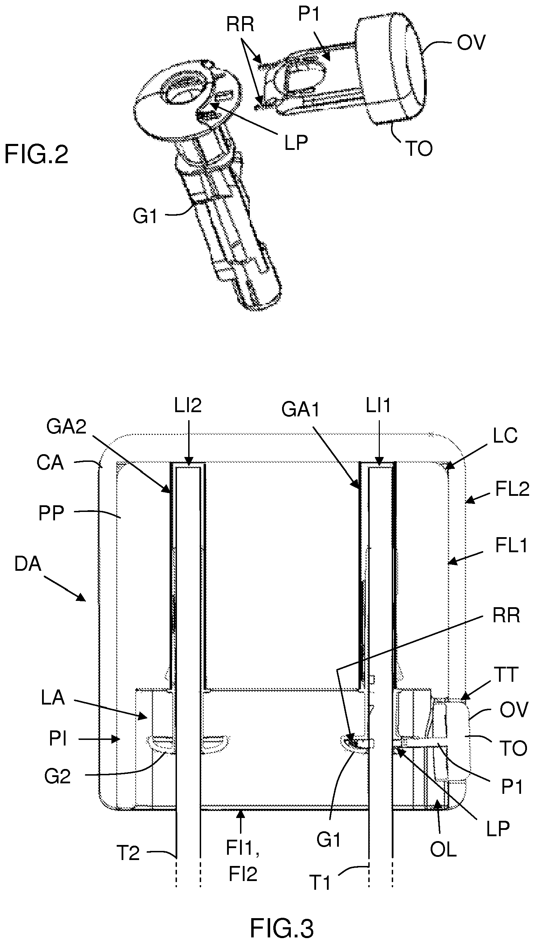

Ces deux tiges (ou broches) Tj sont destinées à être couplées à un dispositif d'appui (ou appui-tête) DA selon l'invention, comme illustré sur la figure 3.

Un dispositif d'appui (ou appui-tête) DA, selon l'invention, comprend au moins une pièce PP munie de deux logements internes Llj sensiblement parallèles et logeant fixement deux guides (de coulissement) Gj dans lesquels sont destinées à coulisser les deux tiges Tj qui sont solidarisées à la partie supérieure PSD du dossier DS.

L'une au moins des tiges Tj, ici celle qui est placée à droite sur les figures 1 et 3 et qui est appelée ci-après première tige T1, comprend des crans qui sont destinés à coopérer avec un organe de verrouillage OV couplé à l'un des guides Gj (ici celui qui est placé à droite sur les figures 1 et 3 et représenté sur la figure 2, et qui est appelé ci-après premier guide G1).

La pièce PP est réalisée dans un matériau qui est légèrement déformable de manière à supporter des dispersions de positionnement relatif des deux tiges Tj (résultant de leur mode de solidarisation à la partie supérieure PSD du dossier DS), et de surcroît propre à absorber de l'énergie en cas de choc de la tête et/ou du cou d'un passager assis sur le siège SI.

Le fait de supporter (ou absorber) les dispersions de positionnement relatif des deux tiges Tj garantie que l'appui-tête DA pourra coulisser correctement, y compris en cas de défaut de parallélisme de ces tiges Tj.

Le matériau est un polypropylène expansé (ou PPE). Dans ce cas, la pièce PP se présente sous la forme d'une mousse qui est très avantageusement rigide, bien que légèrement déformable car légèrement compressible et flexible.

De plus, cette pièce PP comprend une partie inférieure PI dans laquelle est défini un logement additionnel LA qui communique avec les logements internes Llj et avec l'extérieur sur des faces inférieure FI1 et latérale FL1 qu'elle comprend. Ce logement additionnel LA loge une partie de l'organe de verrouillage OV dans une position qui est propre à permettre son actionnement du côté de la face latérale FL1 de la pièce PP.

On entend ici par « face inférieure » une face qui est orientée vers la partie supérieure PSD du dossier DS, et par « face latérale » une face qui est orientée vers l'un des deux côtés latéraux du véhicule qui comprennent les portières.

De préférence, et comme illustré non limitativement sur la figure 3, les logements internes Llj contiennent chacun une gaine en plastique GAj installée fixement. Dans ce cas, la pièce PP peut être réalisée par expansion d'une mousse (ou plus généralement du matériau choisi) dans un moule contenant les deux gaines en plastique GAj. Cette méthode de fabrication de la pièce PP (par surmoulage sur des gaines en plastique GAj) est particulièrement avantageuse lorsque le matériau est un polypropylène expansé car ce dernier s'accroche très bien sur les gaines en plastique GAj, ce qui garantit que leur immobilisation sera de qualité et pérenne.

Les guides Gj sont emmanchés en force dans les logements internes Llj (qui sont définis au-dessus du logement additionnel LA), ou dans les éventuelles gaines en plastique GAj, et comprennent préférentiellement, et comme illustré non limitativement sur les figures 1 à 3, au moins une protubérance latérale anti-retour (par exemple en forme de cran de section triangulaire).

Comme illustré non limitativement sur la figure 3, les logements internes Llj s'étendent de préférence jusqu'au niveau de la face supérieure de la pièce PP, laquelle est opposée à sa face inférieure FI1. Cet agencement est destiné à offrir une hauteur de coulissement maximale pour l'appui-tête DA.

L'organe de verrouillage OV est partiellement intégré dans la pièce PP. En fait, seule sa partie TO qui est destinée à être actionnée par un usager traverse la partie ouverte OL de sa face latérale FL1.

Par exemple, et comme illustré non limitativement sur les figures 2 et 3, l'organe de verrouillage OV peut comprendre une plaque P1 munie d'un trou qui est adapté au coulissement de la première tige Tj (munie de crans). Cette plaque P1 est montée en translation sous une force de rappel élastique dans un logement LP du premier guide G1 (associé à la première tige T1), de manière à permettre un décalage de son trou par rapport à un autre trou que comprend le premier guide G1 au-dessus et au-dessous de ce logement LP (pour permettre le coulissement de la première tige T1). Par ailleurs, cette plaque P1 comprend des première et seconde extrémités opposées. La première extrémité est munie d'une protubérance qui définit la partie TO destinée à être actionnée par un usager. Par exemple cette protubérance TO est de forme cylindrique circulaire. La seconde extrémité est logée dans le fond du logement LP et munie d'au moins un ressort RR (et de préférence deux), destiné à produire la force de rappel élastique (et plus précisément à repousser la plaque P1 vers l'extérieur du logement LP pour qu'elle soit dans une position de repos (ou de verrouillage) lorsqu'elle n'est pas actionnée par un usager).

On comprendra que lorsque l'organe de verrouillage OV est dans sa position de repos (ou de verrouillage), le trou de la plaque P1 est décentré par rapport au trou du premier guide G1 et donc une petite partie de cette plaque P1 est logée entre deux crans de la première tige T1, ce qui empêche un coulissement de l'appui-tête DA. En revanche, lorsqu'un usager pousse la protubérance TO de l'organe de verrouillage OV pour faire passer ce dernier (OV) dans une position active (ou déverrouillée), le trou de la plaque P1 se retrouve sensiblement centré par rapport au trou du premier guide G1 et donc les guides Gj peuvent coulisser par rapport aux tiges Tj, afin de permettre le réglage en hauteur de l'appui-tête DA.

On notera, comme illustré non limitativement sur les figures 1 et 3, que le dispositif d'appui (ou appui-tête) DA peut également comprendre un coussin d'appui CA destiné à compléter ou habiller la pièce PP. Ce coussin d'appui CA est muni d'un logement interne LC qui loge étroitement la pièce PP, communique avec l'extérieur sur des faces inférieure FI2 et latérale FL2 et loge la partie d'extrémité (ou protubérance) TO de l'organe de verrouillage OV qui est destinée à être actionnée. Par ailleurs, ce coussin d'appui CA comprend une face avant FV2 propre à permettre l'appui de la tête et/ou du cou d'un passager.

Par exemple, la face latérale FL2 du coussin d'appui CA peut comporter un trou traversant TT destiné à loger à coulissement la partie d'extrémité (ou protubérance) TO de l'organe de verrouillage OV pour le rendre accessible aux usagers. Dans l'exemple illustré, ce trou traversant TT présente une forme sensiblement circulaire.

On notera que le coussin d'appui CA peut, par exemple, être constitué d'un élément en mousse synthétique (assurant son caractère moelleux) et d'une housse entourant (ou coiffant) cet élément en mousse synthétique. Cet élément peut, par exemple, être réalisé par expansion d'une mousse synthétique dans un moule. Dans ce cas, la pièce PP peut être emmanchée en force dans le logement interne LC de l'élément formé, puis une housse (ou coiffe d'habillage) est placée autour de cet élément formé. Dans une première variante, l'élément peut être réalisé par expansion d'une mousse synthétique dans un moule contenant la pièce PP. L'élément est alors surmoulé sur la pièce PP. Dans une seconde variante, l'élément peut être réalisé par expansion d'adjuvants chimiques entre la pièce PP et la housse (ou coiffe d'habillage). Cette dernière méthode de fabrication de l'élément est particulièrement avantageuse lorsque la pièce PP est en polypropylène expansé, car elle lui permet de bien s'accrocher sur cette pièce PP, ce qui garantit que sa solidarisation sera de qualité et pérenne.

L'invention est particulièrement avantageuse car elle permet de réaliser un dispositif d'appui très simple, peu onéreux, de faible masse, capable d'encaisser une partie de l'énergie d'un choc et d'absorber les défauts de parallélisme des tiges, et à organe de verrouillage intégré non bruyant (du fait de sa très grande simplicité). En outre, les guides de coulissement des tiges et l'organe de verrouillage étant désormais logés dans le dispositif d'appui, la partie supérieure du dossier n'a besoin d'héberger que les tiges et donc son épaisseur peut être réduite.

## Revendications

1. Dispositif (DA) pour l'appui de la tête et/ou du cou d'une personne installée sur un siège (SI), ledit dispositif (DA) comprenant au moins une pièce (PP), munie de deux logements internes (Llj) logeant fixement deux guides (Gj) dans lesquels sont destinées à coulisser deux tiges (Tj) sensiblement parallèles et solidarisées fixement à une partie supérieure (PSD) d'un dossier (DS) dudit siège (SI) et qui pour l'une au moins d'entre-elles comprend des crans destinés à coopérer avec un organe de verrouillage (OV) couplé à l'un desdits guides (Gj), ladite pièce (PP), comprenant une partie inférieure (PI) munie d'un logement additionnel (LA) communiquant avec lesdits logements internes (Llj) et avec l'extérieur sur des faces inférieure (FI1) et latérale (FL1) et logeant ledit organe de verrouillage (OV) dans une position propre à permettre son actionnement du côté de ladite face latérale (FL1) **caractérisé en ce que** ladite pièce (PP), est réalisée dans un matériau légèrement déformable pour supporter des dispersions de positionnement relatif desdites tiges (Tj) et propre à absorber de l'énergie en cas de choc de ladite tête et/ou dudit cou, ledit matériau étant un polypropylène expansé.

2. Dispositif selon la revendication 1, **caractérisé en ce qu'**il comprend un coussin d'appui (CA), d'une part, muni d'un logement interne (LC), logeant étroitement ladite pièce (PP), communiquant avec l'extérieur sur des faces inférieure (FI2) et latérale (FL2) et logeant une partie d'extrémité (TO) dudit organe de verrouillage (OV) destinée à être actionnée, et, d'autre part, comprenant une face avant (FV2) propre à permettre l'appui de ladite tête et/ou dudit cou.

3. Dispositif selon l'une des revendications 1 à 2, **caractérisé en ce que** ledit organe de verrouillage (OV) comprend une plaque (P1) munie d'un trou adapté au coulissement de ladite tige (T1) munie de crans, et montée en translation sous une force de rappel élastique dans un logement (LP) dudit guide (G1) associé à la tige (T1) munie de crans, de manière à permettre un décalage de son trou par rapport à un autre trou dudit guide (G1).

4. Dossier (DS) pour un siège (SI), **caractérisé en ce qu'**il comprend une partie supérieure (PSD) à laquelle sont solidarisées fixement au moins deux tiges (Tj), sensiblement parallèles et qui pour l'une au moins d'entre-elles comprend des crans, et au moins un dispositif d'appui (DA) selon l'une des revendications précédentes, monté à coulissement sur lesdites tiges (Tj).

5. Siège (SI), **caractérisé en ce qu'**il comprend au moins un dossier (DS) selon la revendication 4.

6. Véhicule, **caractérisé en ce qu'**il comprend au moins un siège (SI) selon la revendication 5.

7. Véhicule selon la revendication 6, **caractérisé en ce qu'**il est de type automobile.

## Patentansprüche

1. Vorrichtung (DA) für das Stützen des Kopfs und/oder des Halses einer Person, die auf einem Sitz (SI) sitzt, wobei die Vorrichtung (DA) mindestens ein Teil (PP) umfasst, das mit zwei inneren Aufnahmen (LIj) versehen ist, die stationär zwei Führungen (Gj) aufnehmen, in welchen zwei Schäfte (Tj) gleiten sollen, die im Wesentlichen parallel und fest mit einem oberen Teil (PSD) einer Rückenlehne (DS) des Sitzes (SI) verbunden sind, und von welchen mindestens eine Kerben umfasst, die dazu bestimmt sind, mit einem Verriegelungsorgan (OV) zusammenzuwirken, das mit einer der Führungen (Gj) gekoppelt ist, wobei das Teil (PP) einen unteren Teil (PI) umfasst, der mit einer zusätzlichen Aufnahme (LA) versehen ist, die mit den inneren Aufnahmen (LIj) und außen auf einer unteren (FI1) und einer seitlichen Fläche (FL1) in Verbindung stehen und das Verriegelungsorgan (OV) in einer Position aufnehmen, die geeignet ist, seine Betätigung auf der Seite der seitlichen Fläche (FL1) zu erlauben, **dadurch gekennzeichnet, dass** das Teil (PP) aus einem Material hergestellt ist, das leicht verformbar ist, um relative Positionierungsvarianzen der Schäfte (Tj) zu stützen, und geeignet ist, Energie im Fall eines Stoßes des Kopfs und/oder des Halses zu absorbieren, wobei das Material ein expandiertes Polypropylen ist.

2. Vorrichtung nach Anspruch 1, **dadurch gekennzeichnet, dass** sie ein Auflagekissen (CA) umfasst, das einerseits mit einer inneren Aufnahme (LC) versehen ist, die das Teil (PP) knapp aufnimmt, die mit der Außenseite auf einer unteren Fläche (FI2) und einer seitlichen Fläche (FL2) in Verbindung steht und einen Endteil (TO) des Verriegelungsorgans (OV) aufnimmt, der dazu bestimmt ist, betätigt zu werden, und andererseits eine vordere Fläche (FV2) umfasst, die geeignet ist, um das Stützen des Kopfs und/oder des Halses zu erlauben.

3. Vorrichtung nach einem der Ansprüche 1 bis 2, **dadurch gekennzeichnet, dass** das Verriegelungsorgan (OV) eine Platte (P1) umfasst, die mit einem Loch versehen ist, das für das Gleiten des Schafts (T1), der mit Kerben versehen ist, geeignet ist, und in Verschiebung unter einer elastischen Rückstellkraft in einer Aufnahme (LP) der Führung (G1), die mit dem Schaft (T1), der mit Kerben versehen ist, derart montiert ist, dass ein Versatz ihres Lochs bezüglich eines anderen Lochs der Führung (G1) erlaubt ist.

4. Rückenlehne (DS) für einen Sitz (SI), **dadurch gekennzeichnet, dass** sie einen oberen Teil (PSD) umfasst, an dem mindestens zwei Schäften (Tj) fest verbunden sind, die im Wesentlichen parallel sind und von welchen mindestens einer Kerben umfasst, und mindestens eine Stützvorrichtung (DA) nach einem der vorstehenden Ansprüche, die auf den Schäften (Tj) gleitend montiert ist.

5. Sitz (SI), **dadurch gekennzeichnet, dass** er mindestens eine Rückenlehne (DS) nach Anspruch 4 umfasst.

6. Fahrzeug, **dadurch gekennzeichnet, dass** es mindestens einen Sitz (SI) nach Anspruch 5 umfasst.

7. Fahrzeug nach Anspruch 6, **dadurch gekennzeichnet, dass** es vom Kraftfahrzeugtyp ist.

## Claims

1. A device (DA) for supporting the head and/or the neck of a person sitting on a seat (SI), said device (DA) including at least one part (PP), provided with two internal housings (LIj) fixedly housing two guides (Gj) in which two rods (Tj) are intended to slide, which rods are substantially parallel and fixedly secured to an upper portion (PSD) of a backrest (DS) of said seat (SI) and which, for at least one of them, includes notches intended to cooperate with a locking member (OV) coupled with one of said guides (Gj), said part (PP) including a lower portion (PI) provided with an additional housing (LA) communicating with said internal housings (LIj) and with the exterior on lower (FI1) and lateral (FL1) faces and housing said locking member (OV) in a position suitable for permitting its actuation from the side of said lateral face (FL1), **characterized in that** said part (PP) is made from a slightly deformable material so as to withstand variations in relative positioning of said rods (Tj) and suitable for absorbing energy in the event of impact of said head and/or of said neck, said material being an expanded polypropylene.

2. The device according to Claim 1, **characterized in that** it includes a support cushion (CA), on the one hand, provided with an internal housing (LC), housing closely said part (PP), communicating with the exterior on lower (FI2) and lateral (FL2) faces and housing an end portion (TO) of said locking member (OV) intended to be actuated, and, on the other hand, including a front face (FV2) suitable to permit the supporting of said head and/or of said neck.

3. The device according to one of Claims 1 to 2, **characterized in that** said locking member (OV) includes a plate (P1) provided with a hole adapted to the sliding of said rod (T1) provided with notches, and mounted in translation under an elastic return force in a housing (LP) of said guide (G1) associated with the rod (T1) provided with notches, so as to permit an offsetting of its hole in relation to another hole of said guide (G1).

4. A backrest (DS) for a seat (SI), **characterized in that** it includes an upper portion (PSD) to which at least two rods (Tj) are fixedly secured, which rods are substantially parallel and which, for at least one of them, includes notches, and at least one support device (DA) according to one of the preceding claims, slidably mounted on said rods (Tj).

5. A seat (SI), **characterized in that** it includes at least one backrest (DS) according to Claim 4.

6. A vehicle, **characterized in that** it includes at least one seat (SI) according to Claim 5.

7. The vehicle according to Claim 6, **characterized in that** it is of the automobile type.
